Europäisches Patentamt

(19)　European Patent Office

Office européen des brevets

(11)　EP 0 748 848 A2

## (12) EUROPEAN PATENT APPLICATION

(43) Date of publication:
18.12.1996 Bulletin 1996/51

(51) Int. Cl.⁶: C08L 83/07, D01D 5/24

(21) Application number: 96109357.2

(22) Date of filing: 12.06.1996

(84) Designated Contracting States:
DE FR GB IT

(30) Priority: 12.06.1995 JP 144514/95
18.03.1996 JP 61027/96

(71) Applicant: FUJI SYSTEMS CORPORATION
Bunkyo-ku, Tokyo (JP)

(72) Inventors:
• Sato, Koshiro
Tokyo (JP)
• Katayama, Masanori
Miura-gun, Kanagawa-ken (JP)

(74) Representative: Weiss, Peter, Dr. rer. nat.
Patentanwalt,
Zeppelinstrasse 4
78234 Engen (DE)

(54)　**Silicone rubber composition and hollow fiber using the same**

(57)　Disclosed is a silicone rubber composition which comprises a blend of a silicone rubber compound and a liquid silicone rubber or a silicone oil, and is useful for preparing a hollow fiber having a high strength and pressure resistance.

EP 0 748 848 A2

## Description

BACKGROUND OF THE INVENTION

1. Field of the Invention

The present invention relates to a silicone rubber composition of the type of addition hardening, and having low plasticity, high hardness, and high tear strength, comprising a blend of a silicone rubber compound; and a liquid silicone rubber or a silicone oil, and also relates to a hollow fiber in use for medical devices and a method of making the same.

2. Brief Description of the Prior Art

Silicone rubber, as disclosed in Japanese laid-open publication No. 62-21567, is well known as a material suitable in use for preparing artificial lungs, because of its excellent properties in gas permeability, chemical stability, almost no reactive to organisms and antifoaming, as well as less in blood coagulation and deposition. It was, however, impossible to provide an extremely thin walled hollow fiber improved in strength, and in pressure resistance.

A hollow fiber having an external diameter of not exceeding 400 micron and a wall thickness of 75 micron, which is extruded by an extruder equipped with an outlet nozzle having even a reduced diameter, tends to have its external diameter or wall thickness unstable, and is finally broken off because of weakness of the silicone rubber. Such a trouble is caused by silica aggregated within silicone rubber. In addition, since such silicone rubber is, as is customary in the art, provided with an increased molecular weight in order to enhance its tear strength, its branch structure tends to get entangled to be hardly elongated.

Also, as can be seen in Japanese laid-open publications Nos. 5-49693 and 63-235540, it is disclosed a thin walled silicone rubber hollow fiber coated with foamed silicone rubber, and a composite hollow fiber comprising a porous film support and silicone rubber. However, even with such reinforced silicone rubbers as disclosed therein, any extremely thinned hollow fiber having as thin as 300 micron or less in external diameter and 50 micron in wall thickness has not been obtained in the past.

In other words, so long as a conventional silicone rubber is employed, it was impossible to obtain a silicone rubber thin hollow fiber having a thin wall, and having high strength, especially being improved in strength against the internal pressure.

SUMMARY OF THE INVENTION

In order to overcome the above-mentioned disadvantages, the present invention is to provide the following silicone rubber compositions:

(1) a silicone rubber composition comprising a silicone rubber compound and a liquid silicone rubber or silicone oil, these being blended together; and
(2) a silicone rubber composition comprising a blend of: 100 parts by weight of silicone rubber compound, and 5 to 30 parts by weight of liquid silicone rubber or silicone oil; wherein the silicone rubber compound is: a compound of an addition hardening type comprising dimethyl siloxane and/or methylvinyl siloxane, added with silica as the filler, and having a hardness of equal to or exceeding 75 (JIS-A) determined by JISK-6301 Test and tear strength of equal to or exceeding 40 kg/cm (Type A);

liquid silicone rubber is: organopolysiloxane having a viscosity of 100 to 100,000 poise at 25°C; and
silicone oil is: a silicone oil having a viscosity of substantially equal value.

The invention also provides a hollow fiber formed by using the silicone rubber composition described above, and having an external diameter of 300 micron or less, and wall thickness not exceeding 50 micron.

In addition, the invention provides a method of producing a hollow fiber, comprising the steps of blending a silicone rubber compound and either a silicone rubber or silicone oil to produce a silicone rubber composition; and extruding from the resulting composition and stretching the same with heating by running through a vulcanizing chamber, wherein providing a stretching sectional area ratio $S_1 : S_2$ being set in the range from 1:0.5 to 1:0.01, where $S_1$ is the sectional area of the tube immediately after being extruded between the die and nipple, and $S_2$ is that of the tube just being finished process of stretching. More specifically, $S_1$ and $S_2$ are those obtained by the following formulas:

$$S_1 = \pi(r_1/2)^2 - \pi(r_2/2)^2$$

$$S_2 = \pi(r_3/2)^2 - \pi(r_4/2)^2$$

Where,

$r_1$ : internal diameter of the die;
$r_2$: external diameter of nipple;
$r_3$: external diameter of hollow fiber; and
$r_4$: internal diameter of hollow fiber.

The silicone rubber composition of the invention is formed so that silica is uniformly dispersed within the silicone rubber. Accordingly, even extruded so as to be formed into a tube, the silicone rubber is prevented not to be easily broken off.

As stated above, since the composition of the invention is prepared by blending a silicone rubber compound with a liquid silicone rubber or silicone oil, the entangled chain structure in the silicone rubber is released so as to extremely improve its stretching ability. For this reason, by using such silicone rubber composition, a hollow fiber of silicone rubber having an external diameter of not exceeding 300 micron and a wall thickness of as thin as 50 micron or less is easily produced.

DETAILED DESCRIPTION OF THE INVENTION

To 100 parts by weight of any one of silicone rubber compounds 1 and 2 shown in Table 1, it is blended the liquid silicone rubber 1 or 2, or one of silicone oils 1 and 2, by the amount of parts by weight shown and listed as Embodiments 1 to 7 in Table 1, and sufficiently blended by a mixing roll so that the aggregated silica is uniformly dispersed in the silicone rubber compound.

The silicone rubber compound 1 is prepared by mixing dimethyl siloxane with methylvinyl siloxane, and is further added silica as filler. The resulting compound is of an addition hardening type, having its hardness of 80 (JIS-A) as determined by Japanese Standard JIS K-6301 Test, tear strength of 47 kg/cm (Type A) and plasticity of 312 mm x 100.

The silicone rubber compound 2 is prepared by mixing dimethyl siloxane with methylvinyl siloxane, and is further added silica as filler. The resulting compound is of an addition hardening type, having its hardness of 75 (JIS-A) as determined by Japanese Standard JIS K-6301, tear strength of 40 kg/cm (Type A) and plasticity of 328 mm x 100.

The liquid silicone rubber 1 is of organopolysiloxane containing vinyl group, having a viscosity of 100,000 poise at 25°C.

The liquid silicone rubber 2 is of organopolysiloxane containing vinyl group, having a viscosity of 10,000 poise at 25°C.

The silicone oil 1 is a silicone oil having a viscosity of 100,000 poise at 25°C.

The silicone oil 2 is a silicone oil having a viscosity of 100 poise at 25°C.

Table 1.

(Unit: Weight parts)

| Composition | Embodiments | | | | | | | Comparatives | | |
|---|---|---|---|---|---|---|---|---|---|---|
| | 1 | 2 | 3 | 4 | 5 | 6 | 7 | 1 | 2 | 3 |
| Silicone rubber compound 1 | 100 | 100 | | | | | 100 | 100 | 100 | |
| Silicone rubber compound 2 | | | 100 | 100 | 100 | 100 | | | | 100 |
| Liquid silicone rubber1 | 30 | | | | 20 | | | | 35 | |
| Liquid silicone rubber2 | | | 30 | | | | 20 | | | |
| Silicone oil 1 | | 20 | | | | | | 35 | | |
| Silicone oil 2 | | | | 5 | | | 10 | | | 35 |

The resulting silicone rubber composition was extruded in the form of a tube, using an extruder having a value 12 of the ratio L/D, the ratio of the length L and diameter D of the cylinder, and equipped with a die and a nipple as listed in Table 2; with being passed through a vulcanizing chamber and heated in the temperature range of 250 to 470°C by the speed of 200 to 10,000 m/hr, the tube was treated by the process of stretching to form a hollow fiber. After completing such a process of vulcanization, the hollow fiber was postcured in a drying apparatus at 180°C for 2 hours.

Table 2.

| | Embodiments | | | | | | | Comparative examples | | |
|---|---|---|---|---|---|---|---|---|---|---|
| | 1 | 2 | 3 | 4 | 5 | 6 | 7 | 1 | 2 | 3 |
| Internal diameter of die $r_1$ (mm) | 0.4 | 0.5 | 1.1 | 1.5 | 1.8 | 2.5 | 3.0 | 1.1 | 1.8 | 3.0 |
| External diameter of nipple $r_2$ (mm) | 0.3 | 0.3 | 0.5 | 1.0 | 1.5 | 1.7 | 2.0 | 0.5 | 1.5 | 2.0 |
| External diameter of hollow thread $r_3$ (micron) | 250 | 250 | 280 | 280 | 300 | 280 | 300 | 250 | 260 | 280 |
| Internal diameter of hollow thread $r_4$ (micron) | 155 | 160 | 200 | 210 | 210 | 190 | 200 | 160 | 170 | 190 |
| Stretch.* section rat. $S_2/S_1$ | 0.5496 | 0.2306 | 0.0400 | 0.0274 | 0.0463 | 0.0114 | 0.0100 | 0.0384 | 0.0391 | 0.0083 |
| Film thickness of hollow thread (micron) | 47 | 45 | 40 | 35 | 45 | 45 | 50 | 45 | 45 | 45 |

In the Table 2 above:

$$^*S_1 = \pi(r_1/2)^2 - \pi(r_2/2)^2, \quad S_2 = \pi(r_3/2)^2 - \pi(r_4/2)^2.$$

For comparison, the compositions of Comparative examples listed in Table 1 were also blended, stretched and postcured in the same manner as Embodiments.

The resulting hollow fiber was evaluated, the result of which is shown as follows.

(1) In the case of compositions according to Comparative examples 1 to 3, the process of extrusion was enabled but process of stretching was not steadily carried out, causing broken-off of products. Examining the broken-off portions proved that the tested silicone rubber tube was thinned in diameter, and that the uniform processing was impossible.

(2) In contrast, as to any of compositions according to Embodiments 1 to 7, extrusion was successful. Although breakdown was found within the range of 2,000 to 3,000 m in length, there was caused no problems in the process of stretching, and the dimension of both the external diameter and wall thickness was stable.

(3) As to Embodiments 6 and 7, although there were several portions where the tube was drawn and thinned in diameter and where the diameter and thickness were unstable, the dimension of which was included within the range of plus and minus 10 microns, without incorporating any broken-off, and the product was proved satisfactory for the silicone hollow fiber.

(4) As to Embodiments 2, 3, 4 and 5, the dimension of the diameter and wall thickness was stable, and uniformly stretched and continuously produced.

From the result above, it was found, in the process of extrusion and stretching, that: when the stretching section ratio $S_1:S_2$ exceeds 1:0.5, there is likely to cause broken-off to prevent a continuous production; and, when the ratio is lower than 1:0.01, the dimension of diameter and wall thickness is unstable to cause the elongation by the own gravity of the formed tube or the suspension of obtaining a needed dimension.

As discussed above, the silicone rubber composition of the invention and the method of producing the hollow fiber provide a silicone rubber hollow fiber thin in wall thickness having high strength and improved in pressure resistance.

Also, the above advantage serves to have increased gas peameability, and provides small-sized devices, reducing blood retention. Therefore, development of an artificial lung is enabled, by which no leak of blood plasma occurs, and merely minimized damage is effected on red blood cells and blood platelets.

Also, the invention provides improvement in performance, minimization and light weight of various devices employing silicone rubber tubes, such as a deaerator, gas-exchanger, culture device, and chemicals removing device.

## Claims

1. A silicone rubber composition comprising a blend of:

   a silicone rubber compound; and
   a liquid silicone rubber or a silicone oil.

2. A silicone rubber composition comprising a blend of: 100 parts by weight of a silicone rubber compound; and 5 to 30 parts by weight of a liquid silicone rubber or a silicone oil; wherein:

   said silicone rubber compound is dimethyl siloxane and/or methylvinyl siloxane, added with silica as a filler to provide an addition hardening type compound having hardness as determined by JIS is 75, and tear strength of 40 kg/cm (Type A);
   said liquid silicone rubber is organopolysiloxane having a viscosity of 100 to 100,000 poise at 25°C; and
   said silicone oil is a silicone oil having a viscosity of substantially equal value as said organopolysiloxane.

3. A hollow fiber formed of a silicone rubber composition comprising a blend of:

   a silicone rubber compound; and a liquid silicone rubber or a silicone oil; and
   said hollow fiber having an external diameter of 300 micron, and a wall thickness of 50 micron.

4. A method of producing a hollow fiber, comprising the steps of:

   blending a silicone rubber compound and either a silicone rubber or silicone oil to produce a silicone rubber composition; and
   extruding from the resulting composition and stretching the same with heating in a vulcanizing chamber, wherein providing a stretching sectional area ratio $S_1:S_2$ being set in the range from 1:0.5 to 1:0.01, where $S_1$ is the sectional area of the tube immediately after being extruded between the die and nipple, and $S_2$ is that of the tube just being finished by the process of stretching.